# EUROPÄISCHE PATENTSCHRIFT

(11) **EP 2 444 281 B1**
(45) Veröffentlichungstag und Bekanntmachung des Hinweises auf die Patenterteilung: **13.07.2016**
(21) Anmeldenummer: 11466030.1
(22) Anmeldetag: 17.10.2011
(51) Int. Cl.: B60N 2/56, B60N 2/70, B60N 2/58

(54) **Thermisch behaglicher Sitz**
Thermally comfortable seat
Siège thermique agréable

(30) Priorität: 22.10.2010 CZ 20100771
(43) Veröffentlichungstag der Anmeldung: 25.04.2012
(73) Patentinhaber: Skoda Auto a.s., 293 60 Mlada Boleslav (CZ)
(72) Erfinder: Minarik, Roman, 46001 Liberec (CZ); Vopicka, Ondrej, 14300 Praha 12 (CZ); Lencaková, Zuzana, 04022 Kosice (CZ)

(56) Entgegenhaltungen:
- DE-A1- 19 736 951
- DE-A1-102006 054 860
- DE-U1-202007 004 929

## Beschreibung

### Technisches Gebiet

Die Erfindung betrifft die Optimierung des Materialaufbaues eines Sitzes, insbesondere eines Fahrzeugsitzes.

### Bisheriger Stand der Technik

Die Sitze werden durch einen Rahmen und dazu befestigten Schaumpolster sowie Bezugsstoff gebildet.

*Bestehende Lösung des Polyurethanpolsters (PUR) der Sitze für Kraftfahrzeuge* Aufgrund der Einspritzung des PUR-Rohstoffs und der Katalysatoren in die Form des Schaumteiles wird die Polsterung des Sitzkissens und der Sitzlehne mit einem oder zwei Härtegraden ausgeschäumt. In Abhängigkeit von dem Befestigungskonzept werden auch Drähte (evtl. Clips) eingeschäumt, die zur künftigen Befestigung des Sitzbezugs dienen.

Der PUR-Polster weist in der Regel einen, oder mehrere Härtegrade auf. Die Fläche der A-Seite (Sitzteil) sowie der B-Seite (dem Sitzrahmen zugewandte Fläche) ist geschlossen durch die Oberflächenschale des PUR-Schaums (sog. Haut) gebildet. Diese Schale weist gegenüber der Innenfüllung abweichende Eigenschaften auf (die Poren sind geschlossen).

### Bestehende Lösung des Bezugsstoffes

Der bestehende Bezugsstoff wird durch sog. Laminierung gebildet. Die Laminierung ist die Verbindung zweier oder mehrerer Schichten zwecks Bildung eines Sandwiches.

Bestehende Struktur des Bezugsstoffes besteht aus:
- stoffartigem gedesigntem Material (sichtbar) aus 100% PES, evtl. Kunstleder
- PUR-Laminierung in der Stärke ca. 3-8mm
- Futterstoff (100% PES)

Gedesigntes Oberflächenmaterial wird durch sein Stil, die Farbe und das Muster bestimmt. Die PUR-Laminierung verhindert die Unebenheiten auf dem Oberflächenmaterial, besorgt die Stabilität und mechanische Beständigkeit. Der Futterstoff schützt den PUR-Schaum vor Abrieb und ermöglicht darüber hinaus einfachere Handhabung beim Überziehen des Schaumteiles.

Die Laminierungstechnologie verwendet Anlagen für die Verbindung aller drei Schichten mittels offener Flamme. Diese Technologie schmelzt flächendeckend den PUR-Schaum auf, der das Obermaterial mit dem Futter in eine kompakte Schicht verbindet - überzogenes Sandwich.

Die Technologie der Verbindung mit der Flamme schließt die Poren innerhalb des überzogenen Sandwichs und reduziert damit rapid die Möglichkeit des Bezuges die Feuchtigkeit abzuführen und seine eigentliche Luftdurchlässigkeit.

### Nachteile des Ist-Zustandes

- Die bestehendem Schaumpolsterungen haben reduziertes Feuchtigkeitsaufnahmevermögen
- Die Technologie der Verbindung mit der Flamme bei den Bezugsstoffen schließt die Poren innerhalb des überzogenen Sandwichs und reduziert damit rapid die Möglichkeit des Bezuges die Feuchtigkeit abzuführen und seine eigentliche Luftdurchlässigkeit.
- Beim komplett gepolsterten Fahrzeugsitz ergibt sich die Fähigkeit der Wärme- und Feuchtigkeitsabführung immer aus der Konstruktion des Sandwiches des Bezugsstoffes und der Schaumpolsterung. Bei bestehender Lösung sind diese Parameter eingeschränkt.

Ein Sitz mit Schaumpolsterung mit den Merkmalen des Oberbegriffs des Anspruchs 1 ist aus der DE202007004929U1 bekannt.

### Darstellung der Erfindung

Die Erfindung liegt darin, dass die Schaumpolsterung und der Bezugsstoff so optimiert werden, damit die thermische Behaglichkeit der Insassen deutlich verbessert wird. Das Prinzip liegt in der Auswahl und dem Aufbau der bekannten Materialien und Lösungen bei Verwendung geeigneter Technologie. Die Untersuchung bei einem komplett gepolsterten Fahrzeugsitz hat eine Verbesserung um ca. 250% bei der Messung der gesamten Luftdurchlässigkeit des Sitzes im Vergleich zum Sitz der bestehenden Konstruktion erwiesen.

Die neue Konstruktion beruht auf:
- der Nutzung eines 3D-Oberflächenreliefs an der A-Seite des Schaums und der Kanäle für die Feuchtigkeitsabfuhr durch den Schaum
- dem Ersatz der PUR-Laminierung beim Bezugsstoff aus 100% PES (sog. Distanzgewebe)
- dem Ersatz der Laminierungstechnologie mit der offenen Flamme durch die Verbindung der Schichten mit reaktivem PUR-Kleber, der auf sog. Hotmelt aufgetragen wird
- dem Entfall des Futterstoffes beim Bezug wegen der Nutzung des Distanzgewebes mit geschlossener oberen und unteren Fläche des Monofils

*Die Validierung der Ergebnisse für den Entwurf eines thermisch behaglichen Aufbaues der Fahrzeugsitzkomponenten*
A/ Das Nähen der Bezüge, das Aufschneiden, die Arbeit mit dem Stoff
   > Die Kombination der verwendeten Stoffe weist keine abweichende Eigenschaften von den geläufigen Stoffen (mit PUR-Laminierung). Das Aufschneiden und Arbeit mit dem Stoff ist vergleichbar. Bei der Vorbereitung der Schnitte fällen kleine Mikrofaser ab. Die Bezüge müssen vor der Auslieferung gereinigt werden.
B/ Visuelle Qualität
   > Die beste visuelle Qualität wurde bei Stoffen erzielt, die mit der Technologie der reaktiven PUR-Hotmelts verbunden waren. Die Gesamtoptik was befriedigend.
C/ Sitzkomfort, Soft-Touch
   > Der Sitzkomfort wird durch die Nutzung dieser Stoffe nicht beeinflusst. Bei den Mittelteilen muss eine ca. 5mm starke Laminierungsschicht beibehalten werden. Den Soft-Touch stellt der sichtbare Raster der Z-Struktur der Oberfläche dar.
D/ Funktionale Anforderungen
   > Bei den zusammenhängenden Komponenten im Sitz - die Beheizung, die Funktion des Besetzungssensors - wurde keine Beeinflussung festgestellt.

Die Untersuchung bei einem komplett gepolsterten Fahrzeugsitz hat eine Verbesserung um ca. 250% bei der Messung der gesamten Luftdurchlässigkeit des Sitzes im Vergleich zum Sitz der bestehenden Konstruktion erwiesen.

Die Untersuchung der gesamten Luftdurchlässigkeit des Sitzes anhand von drei Muster des thermisch behaglichen Sandwichs. Der Vergleich mit der bestehenden Sitzkonstruktion.

Der Gesamtnutzen des thermisch behaglichen optimierten Aufbaues des Fahrzeugsitzes liegt in der Auswahl geeigneter bestehender Materialien und Technologien für den Polsterschaumteil, im Aufbau des Stoffbezuges und derer Verbindung zur Erreichung der Synergie.

Bei den subjektiven Erprobungen wurden die objektiv gemessenen Werte bestätigt und so angepasster Fahrzeugsitz weist bessere Eigenschaften der thermischen Behaglichkeit auf, die insbesondere bei längeren Fahrten in Sommermonaten merklich sind.

### Übersicht der Figuren der Zeichnungen

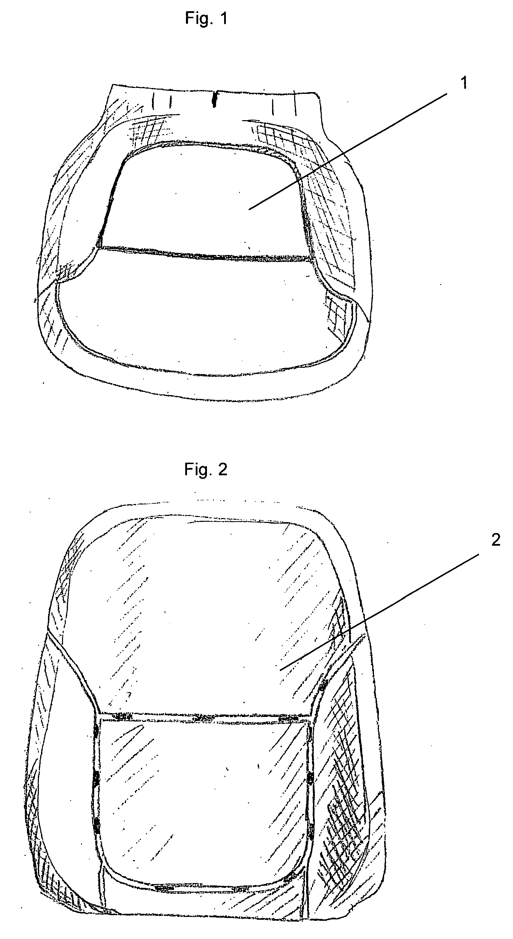

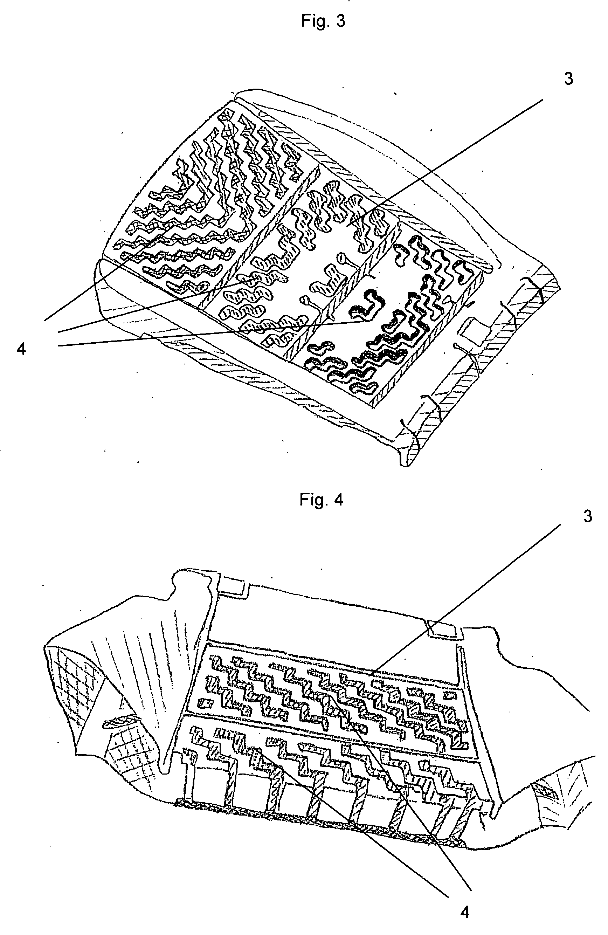

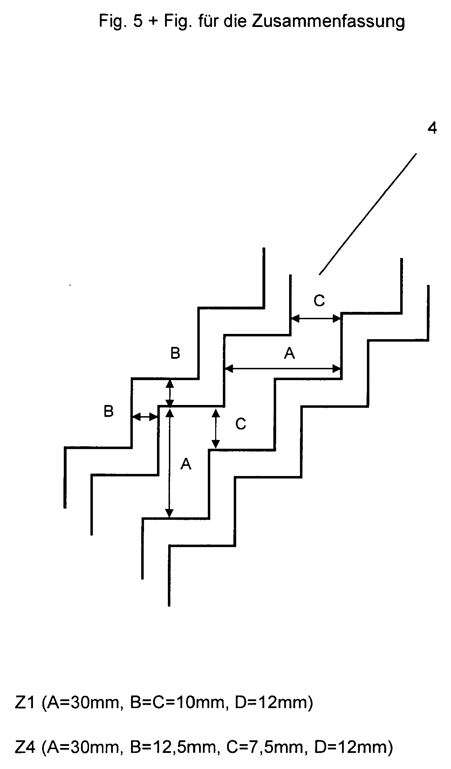

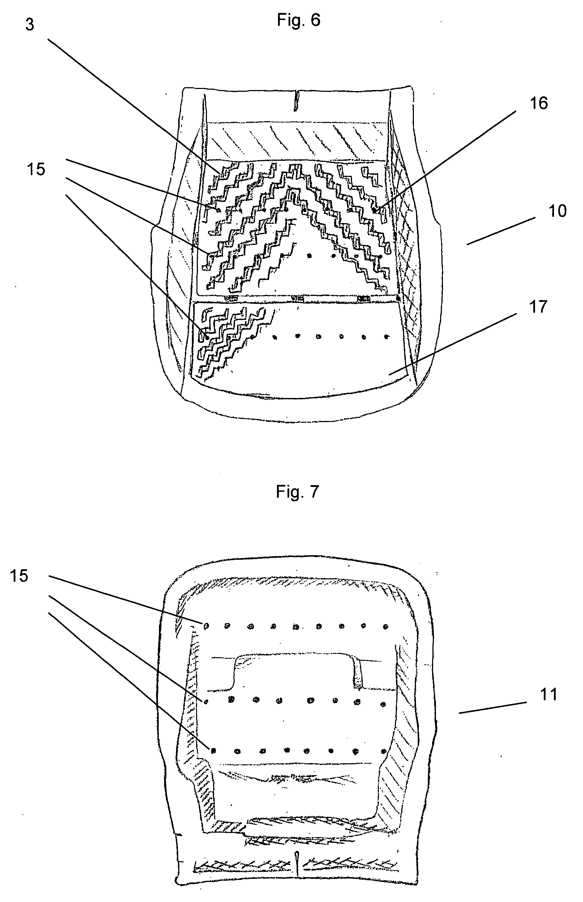

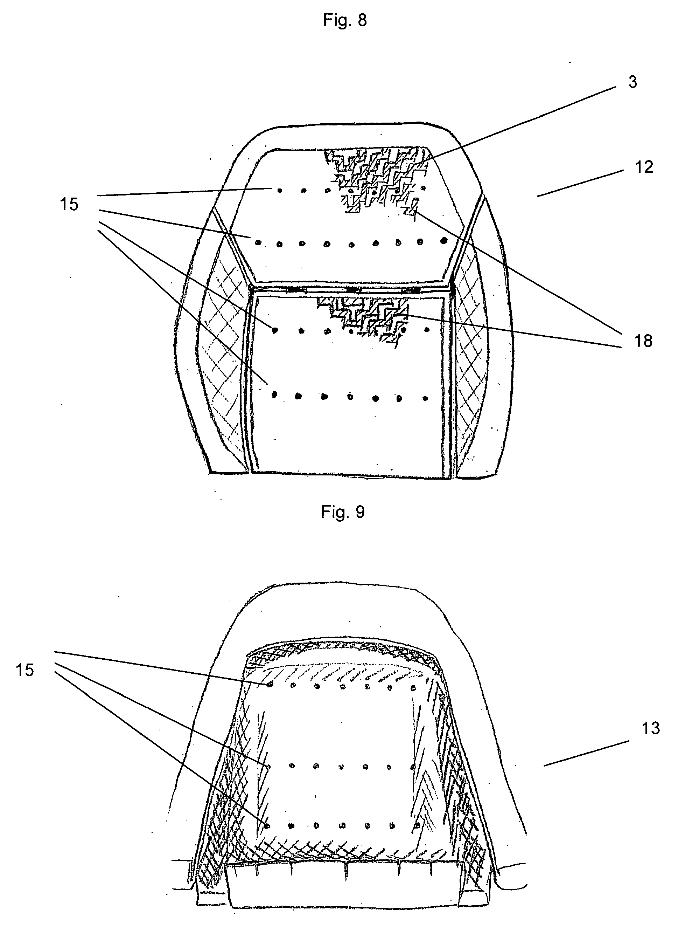

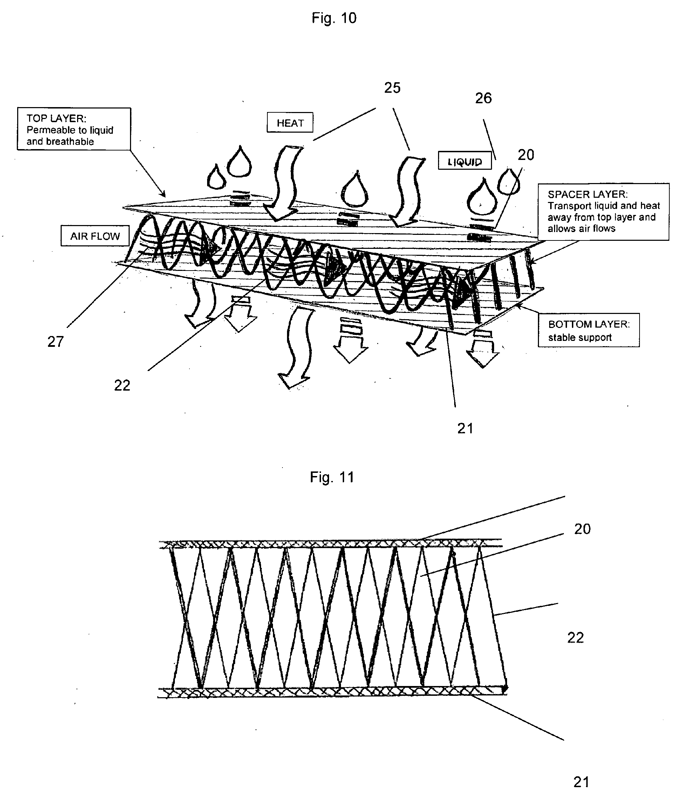

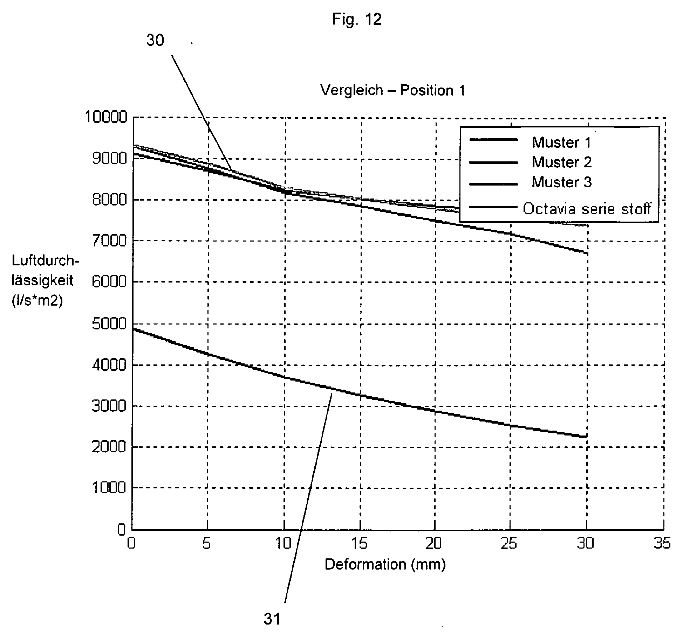

In der Fig. 1 und 2 ist die Schaumpolsterung des Sitzkissens bzw. der Sitzlehne so dargestellt, wie sie derzeit bei den Fahrzeugsitzen meistens genutzt wird. In der Fig. 3 und 4 ist eine weitere bekannte Lösung dargestellt - die Schaumpolsterung mit Z-förmigen Quer- und Längskanälen. In der Fig. 5 sind die Abmessungen der Kanäle gemäß der vorliegenden Erfindung dargestellt. In der Fig. 6 und 7 ist die Einteilung einzelner Abschnitte auf den Schaumteilen des Sitzkissens, in Fig. 6 die Sitzseite A, in Fig. 7 die Kehrseite B dargestellt. In Fig. 8 und 9 ist die Einteilung einzelner Abschnitte auf den Schaumteilen der Sitzlehne, in Fig. 8 die Lehnenseite A, in Fig. 9 die Kehrseite B dargestellt. In Fig. 10 ist die Struktur und das Funktionsprinzip des Distanzgewebes sichtbar. In der Fig. 11 ist das Prinzip der Monofilsetzung beim Distanzgewebe abgebildet. In der Fig. 12 ist das Diagramm der untersuchten Gesamtluftdurchlässigkeit des Sitzes abgebildet.

### Ausführungsbeispiel der Erfindung

In Fig. 1 und 2 ist die Schaumpolsterung des Sitzkissens 1 bzw. der Sitzlehne 2 so dargestellt, wie sie derzeit bei den Fahrzeugsitzen meistens genutzt wird.

In Fig. 3 und 4 ist die Schaumpolsterung 3 aus Polyurethan mit Z-förmigen Quer- und Längskanälen 4 dargestellt. Es handelt sich um die Ausführung der Firma Proseat GmbH + Co. KG, konkret der 3D-Oberflächenrelief des Schaums Comfort Sense.

Die Schaumpolsterung 3 des Sitzkissens 10 und der Sitzlehne 12 weist eine angepasste Sitzseite A mit 3D-Oberfläche in Form von aufeinander anknüpfenden Quer- und Längskanälen 4 (Z-Buchstabe) auf. Für die Feuchtigkeitsabfuhr befinden sich im Schaumpolster 3 an vorgegebenen Stellen die Entlüftungsöffnungen 15 von der A-Seite 10, 12 auf die B-Seite 11, 13.

Durch die Entwicklung und Prüfungen wurde festgestellt, dass die höchste Luftdurchlässigkeit bei der Größe Z1 und Z4 erzielt wird, s Fig. 5 - die Größen möglicher geometrischen Einstellungen, mit Öffnungen D=6mm auf der Sitzseite A des Schaums und 12mm auf der B-Seite des Schaums. Alle diese Konfigurationen werden direkt in die Form des Schaumteiles eingebaut.

Die geometrisch abhängige Maße nach dem Typ der verwendeten Einlage Comfort Sense: A (Gesamtbreite der Rille), B (Breite einer Rille), C (Breite des Kanals) und D (Tiefe des Kanals)
Relief Z1 (A=30mm, B=C=10mm, D=12mm)
Relief Z4 (A=30mm, B=12,5mm, C=7,5mm, D=12mm)

In Fig. 6 und 7 ist die Einteilung einzelner Abschnitte auf den Schaumteilen des Sitzkissens, in Fig. 6 die Sitzseite A 10, in Fig. 7 die Kehrseite B 11 dargestellt. In Fig. 8 und 9 ist die Einteilung einzelner Abschnitte auf den Schaumteilen der Sitzlehne, in Fig. 8 die Lehnenseite A 12, in Fig. 9 die Kehrseite B 13 dargestellt. Die Einteilung einzelner Abschnitte auf den Schaumteilen wurde aus Sicht der größtmöglichen Feuchtigkeitsabfuhr und Luftdurchlässigkeit unter Berücksichtigung des Sitzkomforts vorgenommen.

Auf dem Sitzkissen (10) wurde in dem Sitzbereich eine Schaumpolsterung (3) mit der Größe der Kanäle Z4 im Hüftenbereich (16) und Z1 im Oberschenkelbereich (17), und an der Sitzlehne (12) eine Schaumpolsterung (3) mit der Größe der Kanäle Z1 (18) verwendet.

Der Bezugsstoff besteht gemäß der vorliegenden Erfindung aus:
1. dem gedesignten Material (100% PES) mit einer Luftdurchlässigkeit höher als 200l/dm².min⁻¹ bei 100Pa (nach ISO 9237). Auf dem Markt sind verschiedene Anbieter - z.B. Fezko Thierry, Material Andun Y, Crystal oder Arti.
2. dem Distanzgewebe mit einer Höhe von 5mm, z.B. PUStyl D0048_03 von der Firma Tylex Letovice.

Die Entwicklung hat die Verbindungstechnologie mittels sog. reaktiven PUR-Kleber, der mit Hotmelt-Technologie aufgetragen wird. Zum Beispiel mit der Anlage der Firma Lacom (Gravure-roller coating and laminating system).

Das Funktionsprinzip des Distanzgewebes - einen mikroklimatischen Wärme- und Feuchtigkeitsaustausch zu ermöglichen - ist aus der Fig. 10 ersichtlich. Es besteht aus einer oberen 20 und unteren 21 Schicht und dem Gewebe 22, durch das die Wärme 25 und Feuchtigkeit 26 durchdringen. Auf dem Bild ist der Vorgang der Luftströmung 27 angedeutet. In Fig. 11 ist das Prinzip der Monofil-Setzung 22 beim Distanzgewebe (Spacer) dargestellt.

Die Technologie der Verbindung mit reaktivem PUR-Kleber an der Laminierungsanlage Lacom Gravure-roller coating (sog. dot-coating) ermöglicht ausreichende Verbindung des gedesignten Materials und des Distanzgewebes bei Beibehaltung ausreichender Parameter für die Abfuhr der Oberflächenfeuchtigkeit und für die gesamte Luftdurchlässigkeit.

Angewendete Prüfungen bei solcher Sandwich-Konstruktion des Bezuges haben identische, örtlich auch bessere, mechanische Eigenschaften (Dehnbarkeit des Materials, Haftfähigkeit, Entflammbarkeit, Materialabrieb, usw.) wie bei der bestehenden Konstruktion (gedesigntes Material + PUR-Schaum + Futterstoff, alle durch Laminierung mit der Flamme verbunden) erwiesen.

Für die Bezüge, bei denen eine gedesignte Oberfläche, sog. Gaufer gefordert wird, die warm auf Gauferanlage aufgetragen wird, ist die beste Temperaturkonfiguration (im Hinblick auf die Schmelztemperatur des PUR-Klebers): 140°C (untere Temperatur), 200°C (obere Temperatur), 20s Kontaktdauer der Flächen.

Das Schneiden des Bezugs auf einzelne Teile, der Prozess des Nähens und der Polsterung des Schaumteils sind im Hinblick auf den Arbeitsaufwand identisch mit der bestehenden Lösung des Bezuges.

Die Bedingung für die Bezeichnung des Bezugssandwichs als hinsichtlich der thermischen Behaglichkeit optimierten ist seine gesamte Luftdurchlässigkeit >200l/dm².min⁻¹ bei 100Pa (nach ISO9237).

Die Untersuchung bei einem komplett gepolsterten Fahrzeugsitz hat eine Verbesserung um ca. 250% bei der Messung der gesamten Luftdurchlässigkeit des Sitzes im Vergleich zum Sitz der bestehenden Konstruktion erwiesen. Dies ist in Fig. 12 dargestellt. Die Kurve 31 stellt den Ist-Stand, die Kurven 30 die erfindungsgemäße Ausführung des Sitzes dar.

### Gewerbliche Anwendbarkeit

Der thermisch behagliche Sitz kann in Straßenverkehrsmitteln, insbesondere in Fahrzeugen eingesetzt werden.

## Patentansprüche

1. Ein thermisch behaglicher Sitz bestehend aus einer Schaumpolsterung mit Z-förmigen Quer- und Längskanälen und einem Bezugsstoff,
**dadurch gekennzeichnet, dass**
- die Kanäle (4) der Schaumpolsterung (3) die Größe Z1 (A=30mm, B=C=10mm, D=12mm) und Z4 (A=30mm, B=12,5mm, C=7,5mm, D=12mm) haben und die Öffnungen (15) mit einem Durchmesser von 6 mm an der Sitzseite (10, 12) und 12 mm an der Kehrseite (11, 13) aufweisen, wobei A ist Gesamtbreite der Rille, B ist die Breite einer Rille, C ist die Breite des Kanals und D ist die Tiefe des Kanales,
- und dass der Bezugsstoff aus zwei Schichten besteht: einem gedesignten Material und einem Distanzgewebe.

2. Ein thermisch behaglicher Sitz nach Anspruch 1, **dadurch gekennzeichnet, dass** an dem Sitzkissen (10) im Sitzbereich ein Schaumpolster (3) mit Kanälen der Größe Z4 im Hüftenbereich (16) und Z1 im Oberschenkelbereich (17) und an der Sitzlehne (12) ein Schaumpolster (3) mit Kanälen der Größe Z1 (18) verwendet wurden.

3. Ein thermisch behaglicher Sitz nach Anspruch 1, **dadurch gekennzeichnet, dass** das aus PES hergestellte gedesignte Material eine Luftdurchlässigkeit größer als 200l/dm².min⁻¹ bei 100Pa aufweist und das Distanzgewebe eine identische, flächig gewebte obere und untere Fläche mit Höhe von 5 mm hat.

4. Ein thermisch behaglicher Sitz nach vorgenannten Ansprüchen, **dadurch gekennzeichnet, dass** das gedesignte Material und das Gewebe mit einem reaktiven PUR-Kleber verbunden sind, der punktuell auf einer Laminierungsanlage - Hotmelt aufgetragen wird.

## Claims

1. Thermally comfortable seat composed of a foam upholstery, having Z-shaped transverse and longitudinal channels, and of a cover fabric, **characterized in that**
- the channels (4) of the foam upholstery (3) are of the size Z1 (A = 30 mm, B = C = 10 mm,
D = 12 mm) and Z4 (A = 30 mm, B = 12.5 mm,
C = 7.5 mm, D = 12 mm), and the openings (15) are of a diameter of 6 mm on the seat-face side (10, 12) and of 12 mm on the reverse side (11, 13), wherein A is the total width of the groove, B is the width of a groove, C is the width of the channel, and D is the depth of the channel,
- and **in that** the cover fabric is composed of two layers, one being a designed cloth and one being a woven spacer fabric.

2. Thermally comfortable seat according to Claim 1, **characterized in that** on the seat cushion (10) a foam upholstery (3) having channels of the size Z4 in the hip region (16) and of the size Z1 in the thigh region (17) has been used in the seating region, and a foam upholstery (3) having channels of the size Z1 (18) has been used on the seat back (12).

3. Thermally comfortable seat according to Claim 1, **characterized in that** the designed cloth manufactured from PES has an air permeability of more than 200 l/dm²·min⁻¹ at 100 Pa, and the woven spacer fabric has identical flat-woven upper and lower areas having a height of 5 mm.

4. Thermally comfortable seat according to the preceding claims, **characterized in that** the designed cloth and the woven fabric are connected using a reactive PUR adhesive which is applied in a punctiform manner on a lamination installation hotmelt.

## Revendications

1. Siège thermique agréable, constitué d'un rembourrage de mousse avec des canaux transversaux et longitudinaux en forme de Z et un tissu de recouvrement,
**caractérisé en ce que**
- les canaux (4) du rembourrage de mousse (3) présentent une dimension Z1 (A = 30 mm, B = C = 10 mm, D = 12 mm) et Z4 (A = 30 mm, B = 12,5 mm, C = 7,5 mm, D = 12 mm) et présentent des ouvertures (15) avec un diamètre de 6 mm au niveau du côté du siège (10, 12) et de 12 mm au niveau du côté opposé (11, 13), A étant la largeur totale de la rainure, B étant la largeur d'une rainure, C étant la largeur du canal et D étant la profondeur du canal,
- et **en ce que** le tissu de recouvrement se compose de deux couches, un matériau design et un tissu d'espacement.

2. Siège thermique agréable selon la revendication 1, **caractérisé en ce que** l'on a utilisé au niveau du coussin de siège (10) dans la région du siège un rembourrage de mousse (3) avec des canaux de dimensions Z4 dans la région des hanches (16) et Z1 dans la région des cuisses (17) et au niveau de l'accoudoir (12) un rembourrage de mousse (3) avec des canaux de dimensions Z1 (18).

3. Siège thermique agréable selon la revendication 1, **caractérisé en ce que** le matériau design fabriqué en PES présente une perméabilité à l'air supérieure à 200 1/dm²·min⁻¹ à 100 Pa et le tissu d'espacement présente une surface identique supérieure et inférieure en tissu plat d'une hauteur de 5 mm.

4. Siège thermique agréable selon les revendications précédentes, **caractérisé en ce que** le matériau design et le tissu sont connectés avec un adhésif réactif PUR qui est appliqué ponctuellement sur une installation de laminage - thermofusion.
